# EUROPÄISCHE PATENTSCHRIFT

(11) **EP 2 998 348 B1**
(45) Veröffentlichungstag und Bekanntmachung des Hinweises auf die Patenterteilung: **01.05.2019**
(21) Anmeldenummer: 15002666.4
(22) Anmeldetag: 14.09.2015
(51) Int. Cl.: C08K 3/02, C08L 25/06

(54) **HERSTELLUNG VON FLAMMSCHUTZMITTEL FÜR KUNSTSTOFFE**
MANUFACTURE OF FLAME RETARDANTS FOR PLASTICS
PRODUCTION D'AGENTS DE PROTECTION CONTRE LES FLAMMES POUR PLASTIQUE

(30) Priorität: 19.09.2014 DE 102014013643
(43) Veröffentlichungstag der Anmeldung: 23.03.2016
(73) Patentinhaber: Jackon GmbH, 23970 Wismar (DE)
(72) Erfinder: Falge, Joachim, 23689 Luschendorf (DE)
(74) Vertreter: Kaewert, Klaus

(56) Entgegenhaltungen:
- EP-A1- 0 806 451
- EP-A1- 0 985 706
- WO-A1-2005/056653
- WO-A1-2011/035357
- DE-A1- 1 694 945
- US-A- 5 340 867

## Beschreibung

Die Erfindung betrifft Flammschutzmittel für Kunststoff, insbesondere für Thermoplaste und zu Bauzwecken.

Thermoplaste sind Kunststoffe, die unter Erwärmung erweichen und sich in dem Erweichungszustand verformen lassen und nach Abkühlung die erlangte Form behalten. Dieser Vorgang ist oft wiederholbar.

Zu den Thermoplasten zählen zum Beispiel: Acrylnitril-Butadien-Styrol, (ABS), Polyamide (PA), Polylactat (PLA), Polymethylmethacrylat (PMMA), Polycarbonat (PC), Polyethylenterephthalat (PET), Polyethylen (PE), Polypropylen (PP), Polystyrol (PS), Polyetheretherketon (PEEK) und Polyvinylchlorid (PVC).

Zu den Massenkunststoffen gehören Polystyrol und Polyolefine wie Polyethylen und Polypropylen.

In obiger Aufzählung finden sich Polymere wie Polycarbonat, Polyethylen, Polypropylen, Polystyrol. Die anderen Kunststoffe sind Copolymere. Das heißt, die Copolymere sind aus verschiedenen Monomeren aufgebaut.

Üblicherweise werden die Kunststoffe zusammen mit Additiven, Zuschlägen und Füllstoffen verarbeitet. Die Additive und Zuschläge sollen dem gewünschten Produkt bestimmte Eigenschaften geben; zum Beispiel erhöhte Festigkeit und/oder erhöhte Alterungsbeständigkeit und/oder erhöhte Elastizität. Die Zuschläge können auch dazu dienen die Verarbeitung zu erleichtern. Die Additive können andere Kunststoffe und vieles andere sein; zum Beispiel Fasern.

Die Füllstoffe dienen dazu, den Kunststoff zu strecken.

Der Kunststoff kommt in ungeschäumter Form und in geschäumter Form vor. Der ungeschäumte Kunststoff wird üblicherweise einer formgebenden Verarbeitung unterzogen. Dabei können Extruder Anwendung finden. Im Extruder wird der Kunststoff in einen schmelzflüssigen Zustand gebracht und durch eine Düse ausgetragen, welche dem austretenden Kunststoff die gewünschte Form gibt. Der Extruder kommt in verschiedenen Bauarten vor, besonders häufig als Einschneckenextruder. Dabei läuft in einem Gehäuse eine Schnecke um, welche den Kunststoff zur Extrusionsdüse transportiert.

Eine andere häufig vorkommende Bauart ist der Doppelschneckenextruder. Dabei sind zwei Schnecken in einem Gehäuse parallel zueinander vorgesehen, die entweder gleichsinnig oder gegenläufig rotieren.

Eine seltenere Bauart ist der Planetwalzenextruder, der aus einem innen verzahnten fest angeordneten Gehäuse, einer mittig umlaufenden Zentralspindel und verschiedenen Planetspindeln besteht, die zwischen dem Gehäuse und der Zentralspindel um die Zentralspindel umlaufen. Die Verzahnung der Planetspindeln kämmt mit der Verzahnung der Zentralspindel und der Innenverzahnung des Gehäuses.

Es kommen auch diverse andere Umformeinrichtungen für die Verarbeitung von Kunststoff in Betracht. Zu den anderen Umformeinrichtungen gehören unter anderem Spritzgießmaschinen, Pressen, Kalander.

Mit jedem Extruder kann auch Kunststoffschaum hergestellt werden.

Dabei wird die in dem Extruder entstehende Schmelze mit einem Treibmittel aufgeschäumt. Das Treibmittel kann mit dem Kunststoff (in fester Form) in den Extruder aufgegeben werden. Das Treibmittel kann auch nach Entstehen der Schmelze als Flüssigkeit in den Extruder gespritzt werden.

Im Extruder wird das Treibmittel mit der Schmelze vermischt.

Im Extruder verhindert der dort herrschende Druck ein Aufschäumen des Kunststoffes. Das Aufschäumen erfolgt beim Austritt der Schmelze aus dem Extruder in eine Atmosphäre geringeren Druckes (zumeist Umgebungsdruck).

Mit dem Extruder werden vorzugsweise strangförmige oder granulatförmige Zwischenprodukte bzw. Folien und Bahnen hergestellt. Die Stränge werden wahlweise zu Platten und Stangen abgelängt, die Folien und Bahnen aufgewickelt.

Durch Herstellen dünner Materialstränge und deren sehr häufiges Ablängen entsteht Granulat. Deshalb werden die dazu vorgesehenen Vorrichtungen auch als Granulierungseinrichtungen bezeichnet.

Die Granulatbildung mittels Extruder kann auch genutzt werden, um aus mehreren Additiven und/oder Zuschlägen und/oder Füllstoffen ein Vorprodukt herzustellen, das dann in einem anderen Extruder aufgeschmolzen wird, um zu einem Materialstrang geformt zu werden.

Die Granulierungseinrichtung kann auch genutzt werden, um die aus dem Extruder austretenden Schaumstränge zu Schaumpartikel zu zerkleinern. Die Schaumpartikel sind weitere Zwischenprodukte auf dem Wege zu Schaumprodukten. Dazu werden die entstehenden Schaumpartikel in eine Form gefüllt, um die Schaumpartikel dort mit Heißdampf bzw. Heißgas zu beaufschlagen. Der Dampf bzw. das Gas strömt durch die Zwickelräume zwischen den Schaumpartikeln und bewirkt ein Aufschmelzen der Schaumpartikel an deren Oberfläche. Der zugleich auf die Schaumpartikel wirkende Druck führt zu einer Verschweißung der Schaumpartikel zu einem Ganzen, das den Innenraum der Form abbildet. Nach Abkühlung des Formteiles und Öffnen der Form kann jedes Formteil der Form entnommen werden.

Die vorstehend beschriebenen Schaumpartikel werden zumeist auf anderem Wege hergestellt, nämlich im Wege der Suspensionspolymerisierung. Dabei werden Monomere in eine Suspension in einem Behälter gebracht. Es findet die Polymerisierung in dem Behälter unter Druck und Wärme und unter ständigem Rühren statt. Aus dem Verfahren fällt ein Kunststoffgranulat an.

Das Granulat kann unmittelbar in einen Extruder aufgegeben werden.

Das Granulat kann auch in einem weiteren Arbeitsschritt mit einem gasförmigen Treibmittel beaufschlagt werden, das in die Kunststoffpartikel eindiffundiert. Nach ausreichender Beladung der Kunststoffpartikel mit Treibmittel kommt es im Falle einer Erwärmung zu einem Expandieren des Treibmittels im Granulat. Es entstehen Schaumpartikel, die in der vorstehend beschriebenen Weise zu Formteilen verarbeitet werden können.

Die mit Treibmittel beladenen Kunststoffpartikel können auch in einen Extruder aufgegeben werden, um aufgeschmolzen und zu einem strangförmigen Zwischenprodukt verarbeitet zu werden.

Insbesondere Bauprodukte dürfen in vielen Ländern, insbesondere in Deutschland nur verwendet werden, wenn sie einen ausreichenden Flammschutz besitzen. Seit langem ist es üblich, Flammschutzmittel in den Kunststoff einzumischen. Verschiedene Flammschutzmittel sind nicht mehr zulässig, weil sie eine übermäßige Umweltbelastung bzw. Gesundheitsgefahr beinhalten. Andere Flammschutzmittel sind nicht mehr wirksam genug.

In der WO2011/035357 ist Polystyrol beschrieben, das mit einem Flammschutzmittel versehen ist. Als Flammschutzmittel dient dabei elementarer Schwefel in Kombination mit rotem Phosphor.

Das Polystyrol wird schmelzflüssig mit dem Flammschutgzmittel vermischt und anschließend granuliert, so daß das Polystyrol das Flammschutzmittel ummantelt. Bei der WO2011/035357 entstehen Granulate von 0,2 bis 2,5 mm. Dieser Vorschlag hat sich nicht durchsetzen können.

Der Erfindung liegt die Aufgabe zugrunde, einen neuen umweltverträglichen und gesundheitsverträglichen Flammschutz/Brandschutz mit ausreichender Wirksamkeit zu schaffen.

Das wird mit den Merkmalen der geltenden Ansprüche erreicht.

Dabei wählt die Erfindung aus der außergewöhnlich großen Zahl von bekannten Flamm/Brandschutzmitteln den roten Phosphor. Der rote Phosphor ist als Synergist zu Blähgrafit als Flammschutzmittel aus der DE 102012209163 bekannt. Desgleichen ist der rote Phosphor aus der WO2005/056653 als Synergist zu Blähgrafit als Flammschutz für Partikelschaum aus Polystyrol bekannt. Dort sind Mischungsanteile im Partikelschaum von 2 bis 40 Gew% Blähgrafit und 0 bis 20 Gew% roter Phosphor vorgesehen.

Bei alleinigem Einsatz von rotem Phosphor als Flammschutzmittel zeigt der rote Phosphor nur eine unzureichende Wirkung.

Die Erfindung hat erkannt, daß sich die Wirkung des roten Phosphors als Flammschutzmittel überproportional(mehr als nur in einer Addition von Wirkungen) steigert, wenn elementarer Schwefel als Mischungsanteil/Synergist zugesetzt wird. Dadurch kann mit verhältnismäßig geringem Phosphoranteil eine hohe Flammschutzwirkung erzielt werden.

Vorzugsweise beträgt der Phosphoranteil mindestens 2Gew%, bezogen auf die Menge aus Kunststoff und allen Mischungsanteilen (nachfolgend Gesamtmenge genannt). Weiter bevorzugt beträgt der Phosphoranteil mehr als 3Gew%; höchst bevorzugt beträgt der Phosphoranteil mindestens 3,5Gew%.

Die Obergrenze für die Zumischung von Phosphor beträgt vorzugsweise höchstens 10Gew%; weiter bevorzugt höchstens 7Gew% und höchst bevorzugt höchstens 5Gew%, bezogen auf die Gesamtmenge der Mischung.

Der Mischungsanteil an elementarem Schwefel beträgt mindestens 0,1Gew%, weiter bevorzugt mindestens 0,2Gew% und höchst bevorzugt mindestens 0,8Gew%, bezogen auf die Gesamtmenge der Mischung.

Die Menge für die Zumischung von elementarem Schwefel beträgt höchstens 4Gew%, weiter bevorzugt höchstens 3Gew% und höchst bevorzugt höchstens 2Gew%, bezogen auf die Gesamtmenge der Mischung.

Der elementare Schwefel ist an sich geruchslos. Durch Berührung mit Umgebungsfeuchtigkeit kommt es jedoch früher oder später zu einer Geruchsbelästigung durch entstehende Schwefelwasserstoffgase. Dieses Anwendungshindernis wird in weiterer Ausbildung der Erfindung dadurch beseitigt, daß zumindest der Schwefel vor der Vermischung mit dem Kunststoff mit einem Thermoplast compoundiert wird. Es ist ausreichend, wenn der Geruch dadurch unter die Belästigungsgrenze reduziert wird. Es kann durch Compoundieren auch jede Geruchsentwicklung verhindert werden. Unter dem Comoundieren wird in vorliegendem Fall das Vermischen eines Thermoplasten mit mindestens einem weiteren Stoff und ein anschließendes Granulieren der Mischung verstanden, um die Granulate in einem weiteren Verfahren einzusetzen.

Vorzugsweise erfolgt die Compoundierung zusammen mit dem roten Phospor. Der rote Phosphor kann bei entsprechender Kapselung der Anlage und unter entsprechender Temperierung in elementarer Form mit dem Schwefel zusammen compoundiert werden. Vorzugsweise wird für die gemeinsame Compoundierung mit dem Schwefel bereits ein Phosphorcoumpound eingesetzt. daß mit dem Schwefel ein Compound in Mischung gebracht und zu einem anderen Compound granuliert wird. In dem so eingesetzte Phosphorcoumpound hat der Kunststoff vorzugsweise einen Anteil von 30 Gew%, noch weiter bevorzugt ist der Anteil an Kunststoff mindestens 40 Gew% und höchst bevorzugt mindestens 50 Gew%.

In die Compoundierung können auch weitere Mischungsanteile eingeschlossen werden.

Die Compoundierung bewirkt eine Umhüllung des Schwefels und der anderen Bestandteile mit dem Thermoplast. Die Menge des dafür erforderlichen Thermoplasten ist davon abhängig, wie der Thermoplast mit dem Schwefel und den anderen Bestandteilen zusammen gebracht wird. Wenn der Thermoplast mit den anderen Bestandteilen in kaltem Zustand zusammen gebracht wird und erst danach eine Aufschmelzung erfährt, ist die zum sicheren Umhüllen erforderliche Thermoplastmenge leicht genauso groß wie die Menge an Schwefel und anderen zu umhüllenden Bestandteilen. Wesentlich weniger Thermoplastmenge ist erforderlich, wenn der Thermoplast schon vor dem Zusammenbringen mit dem Schwefel und den anderen zu umhüllenden Bestandteilen aufgeschmolzen wird und im schmelzflüssigen Zustand in den Schwefel und die anderen zu umhüllenden Bestandteil gespritzt wird. Dabei kann die erforderliche Thermoplastmenge gegenüber dem zuvor erläuterten Verfahren leicht um die Hälfte reduziert werden.

Die entstehende Mischung wird zu einem Compound granuliert.

Vorzugsweise findet zur Herstellung der Mischung ein Extruder Verwendung.

Das Compound wird anschließend mit dem gegen Brand zu schützenden Kunststoff in Mischung gebracht bzw. zusammen mit dem gegen Brand zu schützenden Kunststoff verarbeitet.

Das beim Compoundierung verwendete Thermoplast soll eine Schmelztemperatur aufweisen, die so viel höher als die Schmelztemperatur des mit dem Flammschutzmittel zu schützenden Kunststoffes ist, daß der Thermoplast des Compounds beim Aufschmelzen des zu schützenden Kunststoffes den eingeschlossenen Schwefel trotz der Belastung aus der Verarbeitung im Extruder mit einer zum Schutz vor Geruchsbelästigung ausreichenden Dicke fortdauernd umhüllt.

Bei der Anwendung des erfindungsgemäßen Flammschutzmittels auf Polystyrol wird ein ausreichender Unterschied im Schmelzpunkt zu dem den Schwefel und die anderen Bestandteile umhüllenden Thermoplast erreicht, wenn Polyethylen als umhüllender Thermoplast verwendet wird. Polyethylen hat außerdem den Vorteil eines geringen Reibungsbeiwertes. Besonders günstig ist die Verwendung der Polyethylentype PE-HD.

Noch größer wird der Unterschied im Schmelzpunkt, wenn Polypropylen (PP) als umhüllender Thermoplast verwendet wird. Darüber hinaus kann Polyamid (PA) als umhüllender Thermoplast verwendet werden.

Mit den vorbeschriebenen PE- und PP- und PA-Thermoplasten kann zum Beispiel eine Compoundierungstemperatur zwischen 130 und 250 Grad Celsius im Extruder eingehalten werden. Vorzugsweise wird eine Compoundierungstemperatur von 170 bis 230 Grad Celsius im Extruder eingehalten.

Polystyrol findet vorzugsweise als Homopolymer Verwendung. Polystyrol kann aber auch als Copolymer und mit Copolymeren Verwendung finden. Wahlweise können auch ausschließlich Copolymere des Polystyrols Verwendung finden. Copolymere können sein:
Schlagzähpolystyrol (HIPS), anionisch polymeisiertes Polystyrol oder Schlagzähpolystyrol (A-IPS), Styrol-alpha-Methylstyrol (SAM), Acrylnitril-Butadien-Styrolpolymerisate (ABS), Styrol-Acrylnitril (SAN), Acrylnitril-Styrol-Acrylester (ASA), Methylacrylat-Butadien-Styrol (MBS), Methylmethacrylat-Acrylnitril-Butadien-Styrol (MABS), Styrol-Acrylnitril-Maleinsäureanhydrid (SMA), Styrol-Phenylmaleinsäureimid (SPMI), Styrol-Maleinsäureanhydrid-Phenylmalei-nimid-Terpolymere(SMAPMI), Styrol-Acrylnitril-Maeinsäureanhydrid-Terpolymere (SANMA).

Außerdem zeigt sich, daß eine gleichmäßige Verteilung des elementaren Schwefels in dem Flammschutzmittel von Vorteil ist. Einer gleichmäßigen Verteilung ist eine kleine Partikelgröße des gekapselten Schwefels förderlich. In dem Sinne, hat das Compound aus Schwefel und Thermoplast vorzugsweise einen Durchmesser von höchsten 1,5mm, weiter bevorzugt von höchstens 1,2mm und höchst bevorzugt von höchstens 0,9mm. Günstiger können noch kleinere Durchmesser von zum Beispiel höchstens 0,6mm sein.

Bei Einschneckenextrudern ist die Durchtrittsöffnung für die Schmelze entlang der Schnecke so groß, daß das Granulat unbeschadet durch den Extruder gelangen kann.

Bei Doppelschneckenextrudern ist die Situation anders, wenn die beiden Schnecken des Extruders ineinandergreifen. Dann kann die Durchtrittsöffnung für die Schmelze sich zwar halbieren oder noch enger werden. Bei den üblichen Schneckenabmessungen ist dann immer noch eine ausreichend große Durchtrittsöffnung gegeben.

Bei Planetwalzenextrudern hängt die Durchtrittsöffnung für die Schmelze zwischen den ineinander greifenden Zähnen der Verzahnung von dem Spiel in der Verzahnung ab. Vorzugsweise ist ein Spiel vorgesehen, das mindestens gleich dem Granulatdurchmesser ist.

Wahlweise findet neben der Anwendung von rotem Phospor auch der Einsatz anderer Synergisten anstelle von elementarem Schwefel oder zusätzlich zu dem elementaren Schwefel statt. Es kann auch eine Kombination mit anderen Flammschutzmitteln stattfinden, die keine Synergiewirkung oder nur eine geringere Syneriewirkung in Bezug auf den roten Phosphor haben.

Wahlweise erfolgt eine Kombination mit Aluminiumhydroxid (ATH) und/oder Schichtsilikat. Andere gebräuchliche Flammschutzmittel sind Organophosphor-Mittel, Antimontrioxid, Stickstoffverbindungen, Phosphorverbindungen , Metalloxide, Metallhydroxide, Metallsalze, Bor- und Zinkverbindungen.

Hinzu können je nach Verarbeitung des Polystyrols noch andere Mischungsbestandteile kommen. Dazu können unter anderem gehören Dicumylperoxid, Blähgraphit, Treibmittel, Nukleierungsmittel, Gleitmittel, Füllstoffe, Stabilisatoren, Farben. Davon zeigen manche Mischungsbestandteile auch flammhemmende Wirkung. Beispiele sind ATH und Blähgraphit. ATH ist ein bekanntes Nukleierungsmittel. Blähgraphit wird dem Polystyrol zur Wärmeisolierung zugesetzt.

In Versuchen konnten mit dem erfindungsgemäßen Flammschutzmittel in der Anwendung auf Polystyrol schon gute Ergebnisse bei folgender Zusammensetzung erzielt werden:

| Produkt/Typ | Anteil |
|---|---|
| Polystyrol | 88-99Gew% |
| ATH | 0-3Gew% |
| Silikat | 0-3 Gew% |
| Graphit | 0-3 Gew% |
| Dicumylperoxid | 0-0,8Gew% |
| PP | 0-0,5Gew% |
| Elementarer Schwefel | 0,3-1,8Gew% |
| Phospor rot | 2,5-5 Gew% |

## Patentansprüche

1. Herstellung von Flammschutzmittel für Polystyrol zu Bauzwecken, bestehend aus elementarem Schwefel und rotem Phosphor, wobei der Schwefel vor der Einmischung in schmelzflüssiges Polystyrol mit einem geruchshemmenden Thermoplast ummantelt wird,
**dadurch gekennzeichnet,**
**daß**
a)der geruchshemmende Thermoplast aus der Menge Polyamid (PA), Polyethylen (PE), Polypropylen (PP) der Thermoplaste ausgewählt wird,
b)die Ummantelung des Schwefels durch Compoundieren mit dem Thermoplast erfolgt,
c)wobei ein Extruder verwendet wird
d)wobei die zum Compoundieren gehörende Mischung bei einer Temperatur zwischen 170 und 230 Grad Celsius erfolgt
e)nach dem Mischen das Compoundieren durch Granulierung abgeschlossen wird,
f)wobei beim Granulieren Partikel mit einer Größe von höchstens 1,5mm erzeugt werden.

2. Herstellung Herstellung von Flammschutzmittel nach Anspruch 1, **dadurch gekennzeichnet, daß** beim Granulieren Partikel mit einer Größe von höchstens 1,2mm erzeugt werden.

3. Herstellung von Flammschutzmittel nach Anspruch 2, **dadurch gekennzeichnet, daß** beim Granulieren Partikel mit einer Größe von höchstens 0,9mm erzeugt werden.

4. Herstellung von Flammschutzmittel nach einem der Ansprüche 1 bis 3, **dadurch gekennzeichnet, daß** der Phosphoranteil mindestens 2Gew%, bezogen auf die Gesamtmenge des gegen Brand zu schützenden Polystyrols und alle Mischungsanteile, beträgt.

5. Herstellung von Flammschutzmittel nach Anspruch 4 , **dadurch gekennzeichnet, daß** der Phosphoranteil mehr als 3Gew% , bezogen auf die Gesamtmenge des gegen Brand zu schützenden Polystyrols und alle Mischungsanteile, beträgt.

6. Herstellung von Flammschutzmittel nach Anspruch 5, **dadurch gekennzeichnet, daß** der Phosphoranteil mindestens 3,5Gew%, bezogen auf die Gesamtmenge des gegen Brand zu schützenden Polystyrols und alle Mischungsanteile, beträgt.

7. Herstellung von Flammschutzmittel nach einem der Ansprüche 1 bis 6, **dadurch gekennzeichnet, daß** die Obergrenze für die Zumischung von Phosphor höchstens 10Gew%, bezogen auf die Gesamtmenge des gegen Brand zu schützenden Polystyrols und alle Mischungsanteile, beträgt.

8. Herstellung von Flammschutzmittel nach Anspruch 7, **dadurch gekennzeichnet, daß** die Obergrenze für die Zumischung von Phosphor höchstens 7Gew%, bezogen auf die Gesamtmenge des gegen Brand zu schützenden Polystyrols und alle Mischungsanteilen, beträgt.

9. Herstellung von Flammschutzmittel nach Anspruch 8, **dadurch gekennzeichnet, daß** die Obergrenze für die Zumischung von Phosphor höchstens 4Gew%, bezogen auf die Gesamtmenge des gegen Brand zu schützenden Polystyrols und alle Mischungsanteile, beträgt.

10. Herstellung von Flammschutzmittel nach einem der Ansprüche 1 bis 9, **dadurch gekennzeichnet, daß** der Mischungsanteil an elementarem Schwefel mindestens 0,1Gew%, bezogen auf die Gesamtmenge des gegen Brand zu schützenden Polystyrols und allen Mischungsanteile, beträgt.

11. Herstellung von Flammschutzmittel nach Anspruch 10, **dadurch gekennzeichnet, daß** der Mischungsanteil an elementarem Schwefel mindestens 0,2Gew%, bezogen auf die Gesamtmenge des gegen Brand zu schützenden Polystyrols und alle Mischungsanteile, beträgt.

12. Herstellung von Flammschutzmittel nach Anspruch 11, **dadurch gekennzeichnet, daß** der Mischungsanteil an elementarem Schwefel mindestens 0,8Gew%, bezogen auf die Gesamtmenge des gegen Brand zu schützenden Polystyrols und alle Mischungsanteile, beträgt.

13. Herstellung von Flammschutzmittel nach einem der Ansprüche 1 bis 12, **dadurch gekennzeichnet, daß** der Mischungsanteil an elementarem Schwefel höchstens 4Gew%, bezogen auf die Gesamtmenge des gegen Brand zu schützenden Polystyrols und alle Mischungsanteile, beträgt.

14. Herstellung von Flammschutzmittel nach Anspruch 13, **dadurch gekennzeichnet, daß** der Mischungsanteil an elementarem Schwefel höchstens 3Gew%, bezogen auf die Gesamtmenge des gegen Brand zu schützenden Polystyrols und alle Mischungsanteile, beträgt.

15. Herstellung Flammschutzmittel nach Anspruch 14, **dadurch gekennzeichnet, daß** der Mischungsanteil an elementarem Schwefel höchstens 2Gew%, bezogen auf die Gesamtmenge des gegen Brand zu schützenden Polystyrols und alle Mischungsanteile, beträgt.

16. Herstellung von Flammschutzmittel nach einem der Ansprüche 1 bis 15, **dadurch gekennzeichnet, daß** der Schwefel zusammen mit dem roten Phosphor und/oder zusammen mit anderen Mischungsanteilen des Flammschutzmittels und/oder anderen Mischungsanteilen des zu schützenden Polystyrols compoundiert wird.

17. Herstellung von Flammschutzmittel nach Anspruch 5, **dadurch gekennzeichnet, daß** für die gemeinsame Compoundierung mit dem Schwefel ein Phosphorcompound verwendet wird.

18. Herstellung nach einem der Ansprüche 1 bis 17, **dadurch gekennzeichnet, daß** bei Verwendung eines Planetwalzenextruders zwischen den ineinander greifenden Zähnen ein Spiel vorgesehen ist, das mindestens gleich dem Granulatdurchmesser ist.

19. Herstellung nach einem der Ansprüche 1 bis 16, **dadurch gekennzeichnet, daß** das für die Umhüllung bestimmte Thermoplast vor dem Zusammenbringen mit dem Schwefel und anderen zu umhüllenden Bestandteilen aufgeschmolzen wird und im schmelzflüssigen Zustand in den Schwefel und die anderen zu umhüllenden Bestandteilen gespritzt wird.

## Claims

1. Production of flame retardants for polystyrene for building purposes, said flame retardants consisting of elemental sulfur and red phosphorus, wherein the sulfur is coated with an odour-inhibiting thermoplastic before being blended into the molten polystyrene,
**characterised in that**,
a) the odour-inhibiting thermoplastic is selected from the volumethermoplastics polyamide (PA), polyethylene (PE), polypropylene (PP),
b) the sulfur is coated by compounding with the thermoplastic,
c) wherein an extruder is used,
d) wherein the mixture to be compounded is compounded at a temperature between 170 and 230 degrees Celsius,
e) after the mixing the compounding process is terminated by granulation,
f) wherein the granulation produces particles with a maximum size of 1.5mm.

2. Production of flame retardants according to claim 1, **characterised in that** the granulation produces particles with a maximum size of 1.2mm.

3. Production of flame retardants according to claim 2, **characterised in that** the granulation produces particles with a maximum size of 0.9mm.

4. Production of flame retardants according to one of claims 1 to 3, **characterised in that** the phosphorus content is at least 2 wt %, based on the total amount of the polystyrene to be protected against fire, and all mixture fractions.

5. Production of flame retardants according to claim 4, **characterised in that** the phosphorus content is more than3wt %, based on the total amount of the polystyrene to be protected against fire, and all mixture fractions.

6. Production of flame retardants according to claim 5, **characterised in that** the phosphorus content is at least 3.5wt %, based on the total amount of the polystyrene to be protected against fire, and all mixture fractions.

7. Production of flame retardants according to one of claims 1 to 6, **characterised in that** the upper limit for admixing phosphorus is at most10wt %, based on the total amount of the polystyrene to be protected against fire,and all mixture fractions.

8. Production of flame retardants according to claim 7, **characterised in that** the upper limit for admixing phosphorus is at most 7wt %, based on the total amount of the polystyrene to be protected against fire, and all mixture fractions

9. Production of flame retardants according to claim 8, **characterised in that** the upper limit for admixing phosphorus is at most 4 wt %, based on the total amount of the polystyrene to be protected against fire, and all mixture fractions.

10. Production of flame retardants according to one of claims 1 to 9, **characterised in that** the mixture fraction of elemental sulfur is at least 0.1wt %, based on the total amount of the polystyrene to be protected against fire, and all mixture fractions.

11. Production of flame retardants according to claim 10, **characterised in that** the mixture fraction of elemental sulfur is at least 0.2 wt %, based on the total amount of the polystyrene to be protected against fire,and all mixture fractions.

12. Production of flame retardants according to claim 11, **characterised in that** the mixture fraction of elemental sulfur is at least 0.8wt %, based on the total amount of the polystyrene to be protected against fire,and all mixture fractions.

13. Production of flame retardants according to one of claims 1 to 12, **characterised in that** the mixture fraction of elemental sulfur is at most 4 wt %, based on the total amount of the polystyrene to be protected against fire, and all mixture fractions.

14. Production of flame retardants according to claim 13, **characterised in that** the mixture fraction of elemental sulfur is at most 3 wt %, based on the total amount of the polystyrene to be protected against fire,and all mixture fractions.

15. Production of flame retardants according to claim 14, **characterised in that** the mixture fraction of elemental sulfur is at most 2wt %, based on the total amount of the polystyrene to be protected against fire, and all mixture fractions.

16. Production of flame retardants according to one of claims 1 to 15, **characterised in that** the sulfur is compounded together with the red phosphorus and/or together with other mixture fractions of the flame retardant and/or with other mixture fractions of the polystyrene to be protected against fire.

17. Production of flame retardantsaccording to claim 5, **characterised in that** a phosphorus compound is used together with the sulfur for the compounding process.

18. Production according to one of claims 1 to 17, **characterised in that** when a planetary roller extruder is used, a clearance that is at least equal to the granulate diameter is provided between the inter-meshing teeth.

19. Production according to one of claims 1 to 16, **characterised in that** the thermoplastic specified for the coating is melted before admixing the sulfur and other components for the coating, and is injected in the molten state into the sulfur and the other components for the coating.

## Revendications

1. Procédé de fabrication d'un produit ignifuge pour le polystyrène de construction, constitué de soufre élémentaire et de phosphore rouge, le soufre étant enrobé avec une matière thermoplastique anti-odeur avant d'être introduit dans le polystyrène en fusion, **caractérisé en ce que**
a) la matière thermoplastique anti-odeur est choisie parmi le polyamide (PA), le polyéthylène (PE) et le polypropylène (PP),
b) l'enrobage du soufre est réalisé par compoundage avec la matière thermoplastique,
c) une extrudeuse est utilisée,
d) le mélange intervenant dans le compoundage a lieu à une température située entre 170 et 230 degrés Celsius,
e) après le mélange, le compoundage est achevé par une granulation et
f) la granulation produit des particules d'une taille de 1,5 mm maximum.

2. Procédé de fabrication d'un produit ignifuge selon la revendication 1, **caractérisé en ce que** la granulation produit des particules d'une taille de 1,2 mm maximum.

3. Procédé de fabrication d'un produit ignifuge selon la revendication 2, **caractérisé en ce que** la granulation produit des particules d'une taille de 0,9 mm maximum.

4. Procédé de fabrication d'un produit ignifuge selon une des revendications 1 à 3, **caractérisé en ce que** la proportion de phosphore est d'au moins 2% en poids par rapport à la quantité totale du polystyrène à protéger contre le feu et de tous les composants du mélange.

5. Procédé de fabrication d'un produit ignifuge selon la revendication 4, **caractérisé en ce que** la proportion de phosphore est de plus de 3% en poids par rapport à la quantité totale du polystyrène à protéger contre le feu et de tous les composants du mélange.

6. Procédé de fabrication d'un produit ignifuge selon la revendication 5, **caractérisé en ce que** la proportion de phosphore est d'au moins 3,5% en poids par rapport à la quantité totale du polystyrène à protéger contre le feu et de tous les composants du mélange.

7. Procédé de fabrication d'un produit ignifuge selon une des revendications 1 à 6, **caractérisé en ce que** la limite supérieure pour le mélange du phosphore est de 10% en poids maximum par rapport à la quantité totale du polystyrène à protéger contre le feu et de tous les composants du mélange.

8. Procédé de fabrication d'un produit ignifuge selon la revendication 7, **caractérisé en ce que** la limite supérieure pour le mélange du phosphore est de 7% en poids maximum par rapport à la quantité totale du polystyrène à protéger contre le feu et de tous les composants du mélange.

9. Procédé de fabrication d'un produit ignifuge selon la revendication 8, **caractérisé en ce que** la limite supérieure pour le mélange du phosphore est de 4% en poids maximum par rapport à la quantité totale du polystyrène à protéger contre le feu et de tous les composants du mélange.

10. Procédé de fabrication d'un produit ignifuge selon une des revendications 1 à 9, **caractérisé en ce que** la proportion de soufre élémentaire dans le mélange est d'au moins 0,1% en poids par rapport à la quantité totale du polystyrène à protéger contre le feu et de tous les composants du mélange.

11. Procédé de fabrication d'un produit ignifuge selon la revendication 10, **caractérisé en ce que** la proportion de soufre élémentaire dans le mélange est d'au moins 0,2% en poids par rapport à la quantité totale du polystyrène à protéger contre le feu et de tous les composants du mélange.

12. Procédé de fabrication d'un produit ignifuge selon la revendication 11, **caractérisé en ce que** la proportion de soufre élémentaire dans le mélange est d'au moins 0,8% en poids par rapport à la quantité totale du polystyrène à protéger contre le feu et de tous les composants du mélange.

13. Procédé de fabrication d'un produit ignifuge selon une des revendications 1 à 12, **caractérisé en ce que** la proportion de soufre élémentaire dans le mélange est de 4% en poids maximum par rapport à la quantité totale du polystyrène à protéger contre le feu et de tous les composants du mélange.

14. Procédé de fabrication d'un produit ignifuge selon la revendication 13, **caractérisé en ce que** la proportion de soufre élémentaire dans le mélange est de 3% en poids maximum par rapport à la quantité totale du polystyrène à protéger contre le feu et de tous les composants du mélange.

15. Procédé de fabrication d'un produit ignifuge selon la revendication 14, **caractérisé en ce que** la proportion de soufre élémentaire dans le mélange est de 2% en poids maximum par rapport à la quantité totale du polystyrène à protéger contre le feu et de tous les composants du mélange.

16. Procédé de fabrication d'un produit ignifuge selon une des revendications 1 à 15, **caractérisé en ce que** le soufre est compoundé avec le phosphore rouge et/ou avec d'autres composants du mélange du produit ignifuge et/ou d'autres composants du mélange du polystyrène à protéger.

17. Procédé de fabrication d'un produit ignifuge selon la revendication 5, **caractérisé en ce qu'**un compound phosphoré est utilisé pour le compoundage commun avec le soufre.

18. Procédé de fabrication d'un produit ignifuge selon une des revendications 1 à 17, **caractérisé en ce qu'**en cas d'utilisation d'une extrudeuse à rouleaux planétaires, il est prévu entre les dents entrant en prise les unes avec les autres un jeu qui est au moins égal au diamètre du granulat.

19. Procédé de fabrication d'un produit ignifuge selon une des revendications 1 à 16, **caractérisé en ce que** la matière thermoplastique destinée à l'enrobage est fondue avant le mélange avec le soufre et les autres composants à enrober et est pulvérisée à l'état fondu dans le soufre et les autres composants à enrober.
